# EUROPEAN PATENT APPLICATION

(11) **EP 2 613 302 A1**
(43) Date of publication of application: **10.07.2013**
(21) Application number: 11821095.4
(22) Date of filing: 25.08.2011
(51) Int. Cl.: G09B 7/02, G06F 3/048

(54) **PARENT-CHILD INTERACTIVE EDUCATION SYSTEM AND METHOD**

(30) Priority: 30.08.2010 CN 201010268221
(71) Applicant: Linkstar Electronics Group(Shenzhen) Co., Ltd., Shenzhen, Guangdong 518057 (CN)
(72) Inventor: LIU, Zhixiang, Shenzhen Guangdong 518057 (CN); YANG, Haifeng, Shenzhen Guangdong 518057 (CN); YIN, Li, Shenzhen Guangdong 518057 (CN); LI, Miao, Shenzhen Guangdong 518057 (CN); WU, Kailong, Shenzhen Guangdong 518057 (CN); MING, Xiaojun, Shenzhen Guangdong 518057 (CN); LIU, Chanjuan, Shenzhen Guangdong 518057 (CN); WANG, Zu, Shenzhen Guangdong 518057 (CN)
(74) Representative: Hirsch & Associés
(86) International application number: PCT/CN2011/078913
(87) International publication number: WO 2012/028069

(57) **Abstract**

A parent-child interactive education system and method. The system mainly comprises a finding scene constructing module, for constructing and displaying a finding scene according to a scene of different levels of difficulty, a base map matching the scene and a target to be found; a finding position processing module, for acquiring a finding position and comparing the finding position with a distribution area of the target to be found, to obtain a comparison result and judge, according to the comparison result, whether a child accurately finds the target to be found; a scoring module, for scoring according to the comparison result, counting total scores and submitting the total scores to a database for storage; an audio and video module, for providing prompts and knowledge for the child according to the comparison result; and a scene element database, for storing the scene of different levels of difficulty, the base map matching the scene, the target, and the audio and video. In the parent-child interactive education system and method, the child is educated through finding in an interactive game mode, thereby greatly enhancing the parent-child interaction and the learning interest of the child, and exercising the distinguishing and response capacities of the child. Moreover, the present invention enables the child to learn from the game, thereby greatly enhancing the education effect on the child and promoting the intellectual development of the child.

## Description

This application claims the priority of Chinese patent application No.201010268221.9, titled "PARENT-CHILD INTERACTIVE EDUCATION SYSTEM AND METHOD" and filed with the State Intellectual Property Office on August 30, 2010, which is incorporated herein by reference in its entirety.

### FIELD OF THE INVENTION

The present invention relates to a child education system, and in particular to a parent-child interactive education system and method.

### BACKGROUND OF THE INVENTION

Education and intellectual development for a child are very important in growing of the child, and are also greatly concerned by parents.

Generally, the education and intellectual development for the child are performed with a book of the child by the parents. The child may only accept the designed knowledge in the book passively. The mode of the education is dull, and interaction is insufficient. In addition, the content of the book is dreary, so that learning interest of the child is reduced greatly. Therefore, there is no good for the education and intellectual development for the child. Moreover, the volume of the book is too large to be convenient for carrying with a person.

### SUMMARY OF THE INVENTION

In view of this, it is necessary to provide a parent-child interactive education system which is portable and has an interactive function.

Moreover, it is necessary to provide a parent-child interactive education method.

The parent-child interactive education system includes a server and a client; the server includes a finding scene constructing module, a control module, a scene element database and a first communication module; and the client includes a second communication module, an audio and picture module, a scheduling module, a finding position processing module, a storage module, a scoring module and a display module, in which the finding scene constructing module is adapted to provide scenes with different levels of difficulties, a base map matched with the scene and a targets for a user to be selected, distribute a selected target to be found on the selected base map according to a preset rule and record a distribution area, construct and display a finding scene; the scene element database is adapted to store the scenes with different levels of difficulties, the base maps, the targets, audio and picture matched with the scenes; the finding position processing module is adapted to acquire a finding position during a child finds the target to be found, and compare the finding position with the distribution area of the target to be found to obtain a comparison result and determine, according to the comparison result, whether the child accurately finds the target to be found; the scoring module is adapted to score the finding performed by the child according to the comparison result, count a total score and store the total score into a database; the audio and picture module is adapted to provide at least one of related sounds, texts and pictures as a prompt and knowledge for the child according to the comparison result, so as to instruct and educate the child; the scene element database is connected with the finding scene constructing module, and the finding scene constructing module and the first communication module are connected with the control module; the second communication module, the audio and picture module, the finding position processing module, the storage module, the scoring module and the display module are connected with the scheduling module, the finding position processing module is connected with the scoring module; and the first communication module is connected with the second communication module in a wireless communication mode.

Preferably, the finding scene constructing module includes a display module adapted to perform a related display; a difficulty level acquiring module adapted to acquire a level of difficulty selected by the user; a scene matching acquiring module adapted to receive the level of difficulty selected by the user, match the level of difficulty with a corresponding scene, provide to the display module the scene to be selected by the user, and acquire the scene selected by the user; a base map matching module adapted to receive the scene selected by the user, and match the scene with a corresponding base map; a target matching module adapted to receive the matched base map, match the base map with a corresponding target, and provide to the display module the target to be selected by the user; a target to be found acquiring module adapted to acquire the target to be found which is selected by the user and is desired to be found by the child; and a target to be found distributing module adapted to receive the target to be found, distribute the target to be found on the base map according to the preset rule, record the distribution area of the target to be found on the base map, construct the finding scene, and provide the finding scene to the display module for display.

Preferably, the finding position processing module includes a finding position acquiring module adapted to acquire a finding position click-selected by the child on the base map when the child finds the target to be found; and a position comparing module adapted to compare the finding position with the distribution area of the target to be found, determine whether the finding position is located into the distribution area to obtain a comparison result and determine, according to the comparison result, whether the child accurately finds the target to be found.

Preferably, the audio and picture module includes a voice module adapted to play a corresponding voice stored in the database according to the comparison result; and a picture and text module adapted to provide a text or picture which is stored in the database and corresponds to the voice played by the voice module.

Preferably, the finding scene constructing module further includes a difficulty level adjusting module adapted to automatically adjust the level of difficulty according to the total score counted by the scoring module, so as to construct a finding scene with a suitable level of difficulty.

Preferably, the system further includes a knowledge database adapted to store a variety of knowledge.

Preferably, the system further includes a target to be found prompting module is connected with the finding position processing module and is adapted to prompt the child when the child does not find the target.

Preferably, the system further includes a position fine adjusting module adapted to fine adjust the position of the target to be found.

A parent-child interactive education method includes providing scenes with different levels of difficulties, base maps matched with the scenes and targets to be selected by a user, distributing a selected target to be found on the selected base map according to a preset rule, recording a distribution area, constructing and displaying a finding scene; acquiring a finding position when a child finds the target to be found, and comparing the finding position with the distribution area of the target to be found to obtain a comparison result and determining, according to the comparison result, whether the child accurately finds the target to be found; scoring the finding process of the child according to the comparison result, counting and storing a total score; and providing one or more of the sound, the text and the picture related to the target to be found as prompt and knowledge for the child according to the comparison result, so as to instruct and educate the child.

Preferably, the step of providing scenes with different levels of difficulties, base maps matched with the scenes and targets for a user to be selected, distributing a selected target to be found on the selected base map according to a preset rule and recording a distribution area, constructing and displaying a finding scene further includes: acquiring a level of difficulty selected by the user; receiving the level of difficulty selected by the user, matching the level of difficulty with a corresponding scene and displaying the scene to be selected by the user, and acquiring a scene selected by the user; receiving the scene selected by the user, matching the scene with a corresponding base map; receiving the base map matched with the scene, matching the base map with a corresponding target and displaying the target, which is selected by the user and is desired to be found by the child; acquiring the target to be found which the user wishes the child to find; and receiving the target to be found, distributing the target to be found on the base map according to the preset rule, recording the distribution area of the target to be found on the base map, constructing and displaying the finding scene for the child to find.

The above-mentioned parent-child interactive education system and method employ an interactive game mode. The parent selects the scenes with different levels of difficulties, the base maps and the targets to be found according to a requirement of the child education, so as to construct the finding scene. The child finds the target to be found in the complex finding scene, and the audio and picture are provided according to the finding result. Therefore, the parent-child interaction and the learning interest of the child are enhanced greatly, the distinguishing and response capacities of the child are exercised. Moreover, the present invention enables the child to learn from the game, thereby greatly ensuring the education and intellectual development of the child.

### BRIEF DESCRIPTION OF THE DRAWINGS

Fig.1 is a structural schematic diagram of a parent-child interactive education system;

Fig.2 is a schematic diagram of a finding scene constructing module;

Fig.3 is a schematic diagram of a finding position processing module; and

Fig.4 is a flowchart of a parent-child interactive education method.

### DETAILED DESCRIPTION OF THE INVENTION

The embodiments according to the present invention will be described in detail in conjunction with accompanying drawings as follows.

A parent-child interactive education system according to the present invention may be applied in a handheld device such as a mobile phone and PDA, so that a child is educated in an interactive game mode.

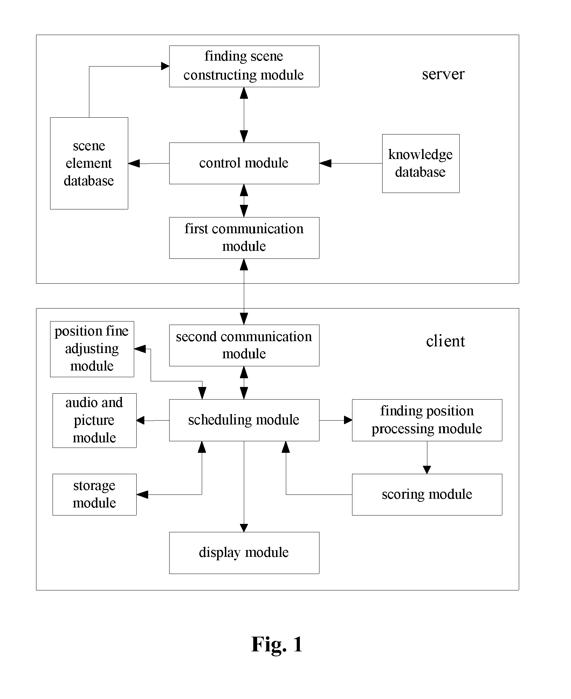

Reference is made to Fig.1. The parent-child interactive education system includes a server and a client. The server includes a finding scene constructing module, a control module, a scene element database, a knowledge database and a first communication module. The client includes a position fine adjusting module, a second communication module, an audio and picture module, a scheduling module, a finding position processing module, a storage module, a scoring module and a display module.

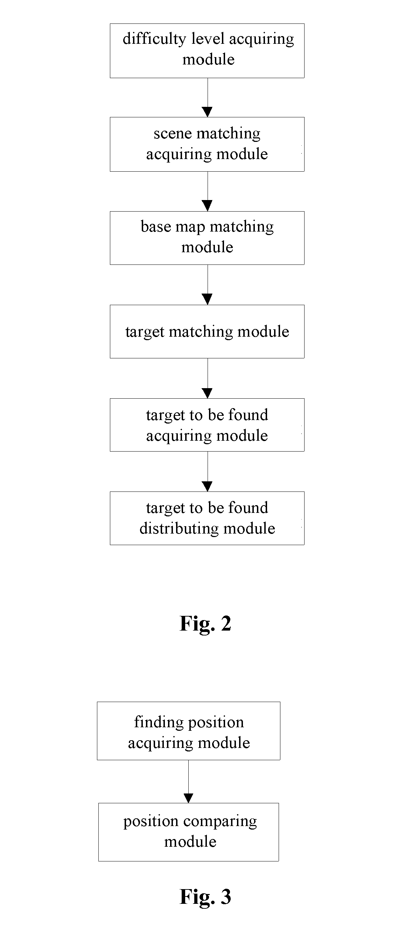

Reference is made to Fig.2. The finding scene constructing module includes a difficulty level acquiring module, a scene matching acquiring module, a base map matching module, a target matching module, a target to be found acquiring module and a target to be found distributing module.

The difficulty level acquiring module is adapted to acquire a level of difficulty selected by a user.

The display module is adapted to display an interface for selecting a level of difficulty. There are three levels of difficulty, i.e. easy, medium and hard, provided for the user to select on the interface for selecting the level of difficulty (the levels of difficulty may also be divided according to the shape, color, size, number and the like of the target). The levels of difficulty may also be divided according to the age of the children. That is to say, the age segments of the children are displayed on the interface and each of the age segments corresponds to a corresponding level of difficulty. The scheduling module sends a selecting instruction for the level of the difficulty to the server via the second communication module after a certain level of difficulty is selected by the user, and the control module sends the selecting instruction to the difficulty level acquiring module after receiving the selecting instruction via the first communication module.

The scene matching acquiring module is adapted to receive the level of difficulty selected by the user, match the level of difficulty with a scene which is stored in the scene element database and corresponds to the level of difficulty; provide, via the control module and the scheduling module, the scene to the display module to display, so that the user selects a needed scene; and acquiring the scene selected by the user.

One level of difficulty may match multiple scenes which are selected by the user. For example, the easy level of difficulty corresponds to multiple scenes such as a forest, the sea, the sky and a city. The scene matching acquiring module submits all of the scenes in a form of a scene selecting interface to the display module, so as to display them, so that the user can select.

The base map matching module is adapted to receive the scene selected by the user, and matching the scene with a base map which is stored in the scene element database and corresponds to the scene.

In the embodiment, after a certain scene is selected by the user, the scene is displayed to the user in the form of the base map. There are objects and environment matched with the scene on the base map. For example, in the case of a forest scene, there are objects such as flowers, grass, trees and creeks on the base map matched with the forest scene. The objects have shapes and colors similar to actual things and are displayed on the base map, thereby the forest scene is constructed in truth.

The base map may be static, dynamic or three dimensional (3D).

The target matching module is adapted to receive the base map matched with the scene, match the base map with a target which is stored in the scene element database and corresponds to the base map, and submit the target to the display module, so that the user may select a target desired to be found by the child from them.

The targets are objects desired to be found by the child, which are provided for the user to select and may be distributed on the base map. For example, if the base map is the forest scene, the targets may be various animals such as a monkey, a tiger, a lion and a squirrel.

The target to be found acquiring module is adapted to acquire the target to be found which the user whishes the child to find.

In the embodiment, the user selects, on the display module, one or more target(s) from the targets matched by the target matching module as the target(s) to be found by the child. For example, if the targets are various animals such as the monkey, the tiger, the lion and the squirrel, the user may select three animals, i.e. the monkey, the tiger and the lion as the targets to be found and distribute them on the base map. Of course, other animals or all of the animals may be distributed on the base map as the targets to be found.

The target to be found distributing module is adapted to receive the target to be found, distribute the target to be found on the base map according to a preset rule, record the distribution area of the target to be found on the base map, construct a finding scene, and submit the finding scene to the display module for display, so that the child can perform the find on the finding scene.

After acquiring the target to be found which is selected by the user, it is needed to distribute the target to be found on the base map, so as to construct the finding scene on which can perform the finding by the child. The target to be found distributing module distributes the target to be found on the whole base map according to the preset rule, displays the target to be found in any shape and at any position (for example, the front side, the lateral side or the reverse side of the lion may be displayed to exercise the space imaginary capacity of the child), and constructs the finding scene. The constructed finding scene may be enlarged, reduced, dragged and previewed, so as to be convenient for the child to find.

The preset rule may be a random distribution or a designated area distribution. After distributing the target to be found on the base map, the target to be found distributing module records the distribution area of the target to be found on the base map (the target to be found generally has certain area, and thereby occupies a certain region when the target to be found is distributed). The target to be found distributing module treats other target to be found as a distracter when the child finds a currently target to be found.

The user may fine adjust the position of the target to be found by means of the position fine-adjusting module to make the distribution more reasonable (for example, if the lion may be distributed randomly on a river, it is needed to be adjusted by the user).

Reference is made to Fig.3. The finding position processing module includes a finding position acquiring module and a position comparing module.

The finding position acquiring module is adapted to acquire a finding position click-selected by the child on the base map when the child finds the target to be found.

After the target to be found is distributed on the base map, the target to be found is displayed on the base map. When the child performs the finding, a click-selecting operation should be performed to find the target to be found. In order to be convenient for the child to perform the click-selecting operation, the display module is preferably provided with a touch screen, so that the child only needs to touch the display module to perform the click-selecting operation and find the target to be found. In other embodiment, a click-selection operation can be performed by a cursor to find the target to be found. The finding position acquiring module acquires a position click-selected by the child as the finding position.

If the targets to be found are overlapped, the finding position acquiring module automatically determines the center of which target is closer to the finding position for the child, so as to determine which target is actually selected by the child.

The position comparing module is adapted to compare the finding position of the child with the distribution area of the target to be found, determine whether the finding position is located into the distribution area to obtain a comparison result, and determine, according to the comparison result, whether the child accurately finds the target to be found or not.

The position comparing module compares the finding position of the child with the distribution area of the target to be found. If the comparison result indicates that the finding position is located into the distribution area, the child accurately finds the target to be found; else, the child does not find the target to be found.

The scoring module is adapted to score according to the comparison result during the finding process of the child and count a total score. According to the control of the scheduling module, the total score is displayed on the display module, and the total score is stored in the storage module.

If the comparison result indicates that the finding position is located into the distribution area, the child accurately finds the target to be found, the scoring module counts a positive score according to a preset score; else, the scoring module counts a negative score. When the finding process ends, the scoring module counts the total score. The scoring module may also count the different score according to a time for the child to find the target to be found, and the level of difficulty of the target to be found.

The audio and picture module includes a voice module and a picture and text module.

The voice module is adapted to play a corresponding voice stored in the scene element database according to the comparison result during the finding process of the child.

If the comparison result indicates that the finding position is located into the distribution area, the child accurately finds the target to be found, and the voice module plays the name, voice and the like corresponding to the target to be found. For example, in a case that the target to be found is the lion, if the child accurately finds the lion, a prompt voice of an accurate finding result, such as the name "lion" corresponding to the lion and the roaring of the lion, is played to make the child know the thing and learn the knowledge. If the child does not find the target to be found, a prompt voice of a wrong finding result, such as "how pity, try again", "come on, almost right" and "to other place to find", is played to prompt the child to find the target to be found continuously and make the child learn the knowledge at the same time.

The picture and text module is adapted to display on the display module a text or picture which is stored in the scene element database and corresponds to the voice during the finding process of the child. For example, if the voice is "lion", "lion" is displayed on the display module; if the voice is the roaring sound of the lion, a picture of the roaring lion is displayed so that the child learns the characters or words and knows various actions of animals.

In other embodiment, the scheduling module reads contents in a knowledge database via the control module, and displays the contents on the display module. A variety of knowledge, such as knowledge related to the lion, is stored in the knowledge database. Moreover, questions related to the lion may be provided to the child to be answered, phrases may be provided to the child to make sentences, and the like.

In other embodiment, the finding scene constructing module further includes: a difficulty level adjusting module adapted to automatically adjust the level of difficulty according to the total score counted by a scoring module, so that a finding scene with a suitable level of difficulty is constructed for the child.

In other embodiment, the client further includes a target to be found prompting module. The target to be found prompting module is connected with the finding position processing module and is adapted to prompt the child via the display module when the child can not find the target. The prompt can be performed by showing the target to be found according to a prompt instruction sent by the user, and can also be performed by the system showing once the target to be found before the child starts a game.

In other embodiment, a client further includes: an inspiriting module adapted to give a corresponding reward (for example, assess a star level, give a coupon of a zoo and the like) to the child when the total score reaches to a predetermined standard, so as to enhance the enthusiasm and interest of the child.

In addition, the present invention further provides a parent-child interactive education method.

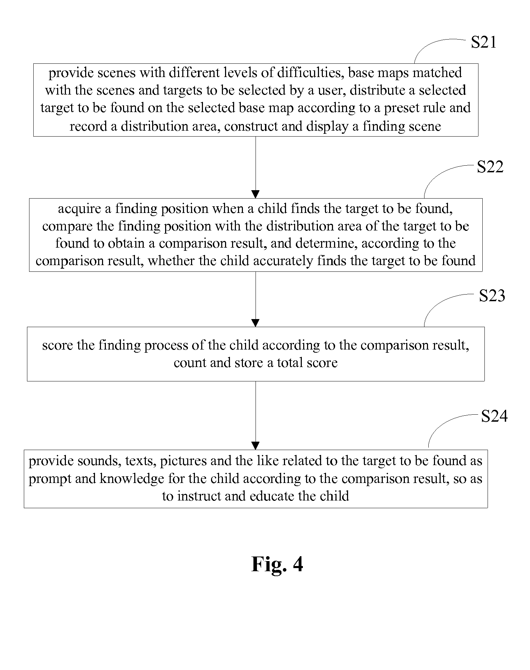

Fig.4 is a flowchart of a parent-child interactive education method according to an embodiment. The method includes the following steps.

S21: providing scenes with different levels of difficulties, base maps matched with the scenes and targets to be selected by a user; distributing a selected target to be found on the selected base map according to a preset rule and recording a distribution area; and constructing and displaying a finding scene.

In the embodiment, after the scenes of different levels of difficulties, the base maps matched with the scenes and the targets are provided to be selected by the user, the method includes the following steps.

Acquiring a level of difficulty selected by the user.

In the embodiment, the level of difficulty is acquired by providing an interface for selecting a level of difficulty to the user. There are three levels of difficulty, i.e. easy, medium and hard, provided for the user to select on the interface for selecting the level of difficulty. The level of difficulty may be divided according to the shape, the color, the size, the number and the like of the target. The level of difficulty may also be divided according to the age of child. That is to say, the age segments of the children are displayed on the interface for selecting the level of difficulty, and each of the age segments correspond to a corresponding level of difficulty.

Receiving the level of difficulty selected by the user, matching the level of difficulty with a corresponding scene and displaying the scene to be selected by the user, and acquiring a scene selected by the user.

In the embodiment, one level of difficulty may match multiple scenes to be selected by the user. For example, the easy level of difficulty corresponds to multiple scenes such as a forest, the sea, the sky and a city. All of the scenes are displayed to be selected by the user in a form of a scene selecting interface.

Receiving the scene selected by the user, and matching the scene with a corresponding base map.

In the embodiment, after a certain scene is selected by the user, the scene is displayed to the user in the form of the base map. On the base map, there are objects and environment suitable for the scene. For example, if the user selects a forest scene, there are objects such as flowers, grass, trees and creeks on the base map matched with the forest scene. The objects are displayed on the base map in shapes and colors similar to actual things, and thereby the forest scene is constructed truthfully.

The base map may be static, dynamic or 3D.

Receiving the base map matched with the scene, matching the base map with a corresponding target and displaying a target to be found which is selected by the user and desired to be found by the child;

In the embodiment, the targets are objects desired to be found by the child, which are provided for the user to select and may be distributed on the base map. For example, if the base map is the forest scene, the targets are various animals such as a monkey, a tiger, a lion and a squirrel.

Acquiring the target to be found which the user wished the child to find.

In the embodiment, the user selects one or more target(s) from the matched targets as the target(s) to be found by the child. For example, if the targets are various animals, such as the monkey, the tiger, the lion and the squirrel, the user may select three animals, i.e. the monkey, the tiger and the lion as the targets to be found and distribute them on the base map. Of course, other or all animals may be distributed on the base map as the target to be found.

Receiving the target to be found, distributing the target to be found on the base map according to the preset rule, recording the distribution area of the target to be found on the base map, constructing and displaying the finding scene to perform the finding by the child.

After the selected target to be found is acquired, it is needed to distribute the target to be found on the base map, so as to construct the finding scene to perform the finding by the child. In the embodiment, the target to be found are distributed on the whole base map according to the preset rule, the target to be found are displayed in any shape and any position (for example, the front side, the lateral side or the reverse side of the lion may be displayed so as to exercise the space imaginary capacity of the child), and the finding scene is constructed. The constructed finding scene may be enlarged, reduced, dragged and previewed so as to be convenient for the child to find.

The distribution may also be performed both randomly and artificially, so as to make the distribution more reasonable (for example, if the lion may be distributed randomly to be on a river, it is needed to be adjusted by the user).

In the embodiment, the preset rule may be a random distribution or a designated area distribution. After the target to be found are distributed on the base map, the distribution area of the target to be found on the base map is recorded (the target to be found generally has certain area and thereby occupies a certain region when the target to be found is distributed), and the child is prompted to start finding a certain target to be found. Other target to be found is treated as a distracter when the child finds the currently target to be found.

S22: acquiring a finding position when the child finds the target to be found; comparing the finding position with the distribution area of the target to be found to obtain a comparison result; and determining, according to the comparison result, whether the child accurately finds the target to be found.

In the embodiment, when the child finds the target to be found, the finding position click-selected by the child on the base map is acquired firstly.

After the target to be found is distributed on the base map, the target to be found is displayed on the base map. When the child finds the target to be found, a click-selecting operation should be performed so as to find the target to be found. In order to be convenient for the child to perform the click-selecting operation, a touch screen is preferably provided for display, such that the child only needs to touch the touch screen to perform the click-selecting operation and find the target to be found. In other embodiment, the target to be found can be found by performing the click-selection using a cursor.

If the targets to be found are overlapped, it is determined automatically the center of which target is closer to the finding position for the child, so as to determine which target is actually selected by the child.

Then the finding position of the child is compared with the distribution area of the target to be found, it is determined whether the finding position is located into the distribution area to obtain the comparison result and it is determined, according to the comparison result, whether the child accurately finds the target to be found.

If the comparison result indicates that the finding position is located into the distribution area, the child accurately finds the target to be found; else, the child does not find the target to be found.

S23: scoring the finding process of the child according to the comparison result, counting and storing a total score.

In the embodiment, if the comparison result indicates that the finding position is located into the distribution area, the child accurately finds the target to be found, and a positive score is counted according to a preset score; else, a negative score is counted. When the finding process ends, the total score is counted. A different score may also be counted according to a time for the child to find the target, and the levels of difficulty of the target to be found by the child.

S24: providing the prompt and the knowledge, such as, the sound, the text, the picture related to the target to be found as to the child according to the comparison result, so as to instruct and educate the child.

In the embodiment, if the comparison result indicates that the finding position is located into the distribution area, the child accurately finds the target to be found, and name, voice and the like corresponding to the target to be found are played for the child. For example, in a case that the target to be found is the lion, if the child accurately finds the lion, a prompt voice of an accurate finding result, such as the name "lion" corresponding to the lion and the roaring sound of the lion, is played, so that the child knows the thing and learns the knowledge. If the child does not find the target to be found, a prompt voice of a wrong finding result, such as "how pity, try again", "come on, almost right" and "to other place to find", is played to prompt the child to find the target to be found continuously and make the child learn the knowledge at the same time.

A text or picture corresponding to the voice is provided to the child at the same time. For example, if the voice is "lion", an English word "lion" is provided; and if the voice is the roaring sound of the lion, a picture of a roaring lion is provided, so that the child learns the characters or words and knows various actions of animals.

In addition, a variety of knowledge may also be provided to the child, such as knowledge related to the lion. Moreover, questions related to the lion may be answered to the child, a phrase may be provided to the child to make a sentence, and the like.

In other embodiment, the method further includes:
prompting the child when the child does not find a target.

The prompt can be performed by showing the target to be found according to an instruction sent by the user, and may also be performed by showing once the target to be found before the child starts a game.

A corresponding reward is given to the child when the total score reaches to a predetermined standard.

For example, a star level is assessed, a coupon of a zoo is given and the like, so that the enthusiasm and interest of the child are enhanced.

The above-mentioned parent-child interactive education system and method employ an interactive game mode. The parent selects the scenes with different levels of difficulties, the base maps and the targets to be found according to a requirement of the child education, so as to construct the finding scene. The child finds the target to be found in the complex finding scene, and the audio and picture associated with the finding result are provided. Therefore, the parent-child interaction and learning interest of the child are enhanced greatly, the distinguishing and response capacities of the child are exercised. Moreover, according to the present invention, the child can learn knowledge from the game, and thereby greatly enhancing the education effect on the child and promoting the intellectual development of the child. Moreover, the system is portable and convenient for the child to use.

The above-mentioned embodiments only represent the implements of the present invention, and the description thereof is very specific and detailed, however, it should not be noted that the scope of the present invention is limited to the detailed description. It should be noted that, for those skilled in the art, some changes and improvements can also be made without deviation from the conception of the present invention, and the changes and improvements all belong to the protection of scope of the present invention. Therefore, the protection scope of the present invention should be defined by the appended claims.

## Claims

1. A parent-child interactive education system, comprising a server and a client, wherein the server comprises a finding scene constructing module, a control module, a scene element database and a first communication module; and the client comprises a second communication module, an audio and picture module, a scheduling module, a finding position processing module, a storage module, a scoring module and a display module, and wherein
the finding scene constructing module is adapted to provide scenes with different levels of difficulties, base maps matched with the scenes and targets for a user to be selected, distribute a selected target to be found on the selected base map according to a preset rule; record a distribution area, construct and display a finding scene;
the scene element database is adapted to store the scenes with different levels of difficulties, the base maps, targets, and audio and picture matched with the scenes;
the finding position processing module is adapted to acquire a finding position when a child finds the target to be found, and compare the finding position with the distribution area of the target to be found to obtain a comparison result, and determine, according to the comparison result, whether the child accurately finds the target to be found;
the scoring module is adapted to score the finding performed by the child according to the comparison result, count a total score and store the total score into a database;
the audio and picture module is adapted to provide at least one of related sounds, texts and pictures as prompt and knowledge for the child according to the comparison result, so as to instruct and educate the child;
the scene element database is connected with the finding scene constructing module, and the finding scene constructing module and the first communication module are connected with the control module;
the second communication module, the audio and picture module, the finding position processing module, the storage module, the scoring module and the display module are connected with the scheduling module, the finding position processing module is connected with the scoring module; and
the first communication module is connected with the second communication module in a wireless communication mode.

2. The parent-child interactive education system according to claim 1, wherein the finding scene constructing module comprises:
a display module adapted to perform a related display;
a difficulty level acquiring module adapted to acquire a level of difficulty selected by the user;
a scene matching acquiring module adapted to receive the level of difficulty selected by the user, match the level of difficulty with a corresponding scene, provide to the display module the scene to be selected by the user, and acquire the scene selected by the user;
a base map matching module adapted to receive the scene selected by the user, and match the scene with a corresponding base map;
a target matching module adapted to receive the matched base map, match the base map with a corresponding target, and provide to the display module the target to be selected by the user;
a target to be found acquiring module adapted to acquire the target to be found which is selected by the user and is desired to be found by the child; and
a target to be found distributing module adapted to receive the target to be found, distribute the target to be found on the base map according to the preset rule, record the distribution area of the target to be found on the base map, construct the finding scene, and provide the finding scene to the display module for display.

3. The parent-child interactive education system according to claim 1, wherein the finding position processing module comprises:
a finding position acquiring module adapted to acquire a finding position click-selected by the child on the base map when the child finds the target to be found; and
a position comparing module adapted to compare the finding position with the distribution area of the target to be found, determine whether the finding position is located into the distribution area to obtain a comparison result, and determine, according to the comparison result, whether the child accurately finds the target to be found.

4. The parent-child interactive education system according to claim 1, wherein the audio and picture module comprises:
a voice module adapted to play a corresponding voice stored in the database according to the comparison result; and
a picture and text module adapted to provide a text or picture which is stored in the database and corresponds to the voice played by the voice module.

5. The parent-child interactive education system according to claim 2, wherein the finding scene constructing module further comprises:
a difficulty level adjusting module adapted to automatically adjust the level of difficulty according to the total score counted by the scoring module, so as to construct a finding scene with a suitable level of difficulty.

6. The parent-child interactive education system according to claim 1, wherein the system further comprises:
a knowledge database adapted for storing a variety of knowledge.

7. The parent-child interactive education system according to claim 1, wherein the system further comprises:
a target to be found prompting module connected with the finding position processing module and adapted to prompt the child in the case that the child does not find the target.

8. The parent-child interactive education system according to claim 1, further comprising:
a position fine adjusting module adapted to fine adjust the position of the target to be found.

9. A parent-child interactive education method, comprising:
providing scenes with different levels of difficulties, base maps matched with the scenes and targets to be selected by a user, distributing a selected target to be found on the selected base map according to a preset rule, recording a distribution area, constructing and displaying a finding scene;
acquiring a finding position when a child finds the target to be found, and comparing the finding position with the distribution area of the target to be found to obtain a comparison result and determining, according to the comparison result, whether the child accurately finds the target to be found;
scoring the finding process of the child according to the comparison result, counting and storing a total score; and
providing one or more of sounds, texts and pictures related to the target to be found as prompt and knowledge for the child according to the comparison result, so as to instruct and educate the child.

10. The parent-child interactive education method according to claim 9, wherein the step of providing scenes with different levels of difficulties, base maps matched with the scenes and targets to be selected by the user, distributing a selected target to be found on the selected base map according to a preset rule and recording a distribution area, constructing and displaying a finding scene comprises:
acquiring a level of difficulty selected by the user;
receiving the level of difficulty selected by the user, matching the level of difficulty with a corresponding scene and displaying the scene to be selected by the user, and acquiring a scene selected by the user;
receiving the scene selected by the user, matching the scene with a corresponding base map;
receiving the base map matched with the scene, matching the base map with a corresponding target and displaying the target which is selected by the user and is desired to be found by the child;
acquiring the target to be found which the user wishes the child to find; and
receiving the target to be found, distributing the target to be found on the base map according to the preset rule, recording the distribution area of the target to be found on the base map, constructing and displaying the finding scene for the child to find.
